(19) Europäisches Patentamt
European Patent Office
Office européen des brevets

(11) Veröffentlichungsnummer: **0 014 822**
**A1**

(12) # EUROPÄISCHE PATENTANMELDUNG

(21) Anmeldenummer: **80100058.9**

(22) Anmeldetag: **07.01.80**

(51) Int. Cl.³: **C 08 F 210/00**
C 08 F 4/64
//(C08F210/00, 216/02, 220/04)

(30) Priorität: **17.01.79 DE 2901647**

(43) Veröffentlichungstag der Anmeldung:
**03.09.80 Patentblatt 80/18**

(84) Benannte Vertragsstaaten:
**DE FR GB IT**

(71) Anmelder: **BAYER AG**
**Zentralbereich Patente, Marken und Lizenzen**
**D-5090 Leverkusen 1, Bayerwerk(DE)**

(72) Erfinder: **Arlt, Klaus-Peter, Dr.**
**Anton-Aulke-Ring 9**
**D-4401 Senden(DE)**

(72) Erfinder: **Binsack, Rudolf, Dr.**
**Bethelstrasse 4a**
**D-4150 Krefeld(DE)**

(72) Erfinder: **Grigo, Ulrich, Dr.**
**Steinstrasse 161**
**D-4150 Krefeld(DE)**

(72) Erfinder: **Neuray, Dieter, Dr.**
**Buschstrasse 149**
**D-4150 Krefeld(DE)**

(54) **Verfahren zur Herstellung von polare Gruppen enthaltenden Alpha-Olefin-Copolymeren und erhaltene Copolymere.**

(57) Copolymere aus α-Olefinen der Formel (A)

$$CH_2 = \underset{R}{\underset{|}{CH}} \qquad (A)$$

worin
R Wasserstoff, Alkyl mit 1 bis 16 C-Atomen oder Phenyl bedeutet,
und substituierten α-Olefinen der Formel (B)

$$CH_2 = \overset{R^1}{\overset{|}{C}} - \left( \overset{R^2}{\underset{H}{C}} \right)_n - Z \qquad (B)$$

in der
$R^1$ H, $CH_3$;
$R^2$ H, Alkyl $C_1$-$C_4$;
n 2 bis 16;
Z -OH, -COOH
ist, in denen 1 bis 50 Gew.-% Monomer (B) einpolymerisiert sind und die einen Melt-Flow-Index 230/5 von 2 bis 20 g/10 Minuten haben, und ein Verfahren zu ihrer Herstellung.

EP 0 014 822 A1

BAYER AKTIENGESELLSCHAFT
Zentralbereich
Patente, Marken und Lizenzen

5090 Leverkusen, Bayerwerk
G/Rz/kl

BEZEICHNUNG GEÄNDERT
siehe Titelseite

## Verfahren zur Herstellung von polare Gruppen enthaltenden α-Olefin-Copolymeren

Gegenstand der Erfindung sind Copolymere aus α-Olefinen der Formel (A)

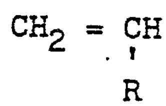 (A)

worin R Wasserstoff, Alkyl mit 1 bis 16 C-Atomen oder Phenyl bedeutet, und substituierten α-Olefinen der Formel (B)

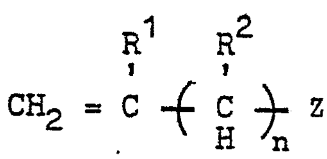 (B)

in der $R^1$ = H, $CH_3$; $R^2$ = H, Alkyl $C_1 - C_4$; n = 16, Z = -OH, -COOH ist, in denen 1 - 50 Gew.-% Monomer (B) einpolymerisiert

sind und die einen Melt-Flow-Index 230/5 von 2 - 20 g/10 Minuten haben.

Ein weiterer Gegenstand der Erfindung ist ein Verfahren zur Herstellung von Copolymeren aus α-Olefinen der Formel (A) mit substituierten α-Olefinen der Formel (B), das dadurch gekennzeichnet ist, daß man ein oder mehrere α-Olefine (A) mit einer Metallverbindung des substituierten α-Olefins (B) der Formel

$$\left[CH_2 = \overset{R^1}{\overset{|}{C}} \left( \overset{R^2}{\overset{|}{\underset{H}{C}}} \right)_n Z' \right]_x AlA_y$$

worin $R^1$, $R^2$ die bereits genannte Bedeutung haben, Z' = -O-, -COO-; n = 2 - 16; A = Halogen und/oder Alkyl, x und y ganze Zahlen, deren Summe = 3, umsetzt in Anwesenheit eines Katalysators aus einem festen katalytischen Komplex auf Basis $TiCl_3$ und einer Aluminiumverbindung der Formel

$$Al\ R^6_n X_{3-n}$$

worin $R^6 = C_1\text{-}C_{18}$ Alkyl, X = Halogen, bevorzugt Chlor und $0 < n \leq 3$ ist.

Die Homopolymerisation von α-Olefinen und die Copolymerisation von α-Olefinen untereinander mit Ziegler-Natta-Katalysatoren sind bekannt. Die vom olefinischen Charakter dieser Polymeren herrührenden Eigenschaften wie Wasserbeständigkeit, chemische Resistenz gegen Säuren und Alkalien sind im allgemeinen von Vorteil, jedoch sind durch das Fehlen polarer Gruppen auch Nachteile vorhanden, wie geringe

Anfärbbarkeit, geringes Haftvermögen, geringe Bedruckbarkeit, geringe Mischbarkeit mit anderen, insbesondere mit polare Gruppen enthaltenden Polymeren. Reine Polyolefine laden sich leichter elektrostatisch auf und ziehen Staub- und Schmutzpartikel an.

Es ist bekannt, Copolymerisate aus Olefinen und polare Gruppen enthaltenden ungesättigten Monomeren durch radikalische Polymerisation herzustellen, jedoch können nach diesem Verfahren kristalline Copolymere nicht erhalten werden, wenn Olefine mit mehr als zwei Kohlenstoffatomen verwendet werden. Außerdem wird bei der radikalischen Copolymerisation mit höheren α-Olefinen kein ausreichend hoher Polymerisationsgrad erreicht.

Die Copolymerisation mit α-Olefinen mit polare Gruppen enthaltenden α-Olefinen unter Verwendung von Ziegler-Natta-Katalysatoren ist prinzipiell ebenfalls bekannt. Jedoch wird im allgemeinen die Aktivität der Katalysatoren erheblich herabgesetzt.

Beispiele für Verfahren zur Copolymerisation von α-Olefinen mit polare Gruppen enthaltenden ethylenisch ungesättigten Monomeren sind im J. Polym. Sci., Part A-1, 9, 471 bis 483 (1971), in DE-OS 19 47 109 und in GB-PS 15 05 480 beschrieben.

So kann man Propylen-Acrylsäure-Copolymere mit einem Katalysator aus $TiCl_3$/Diethylaluminiumchlorid durch Copolymerisation von Propylen und der Verbindung

$$(C_2H_5)ClAlO\underset{\underset{O}{\|}}{C}-\underset{H}{C}=CH_2$$

herstellen. Nach dieser Methode hergestellte Copolymere haben einen in siedender konzentrierter Salzsäure löslichen Anteil von 54 % und lassen sich nur in einer spezifischen Ausbeute von ca. 30 bis 50 g Polymer/g Ti . h . atm darstellen.

Nach dem in der DE-OS 19 47 109 beschriebenen Verfahren werden Copolymere aus α-Olefineinheiten und Einheiten der Formel

$$-CH_2-\underset{|}{CH}-$$
$$(Z)_n-OA'$$

hergestellt, wobei Z eine zweiwertige Methylengruppe darstellt, $n \geq 2$ ist und A' ein Wasserstoffatom oder eine Acylgruppe bedeutet. Dabei wird das polare Comonomere in Form einer Metallverbindung der Formel

$$(CH_2 = CH - Z - O)_n\ M\ A_m$$

eingesetzt, in der Z eine zweiwertige Kohlenwasserstoffgruppe mit 2 bis 15 Kohlenstoffatomen, A ein Halogenatom und/oder eine einwertige Kohlenwasserstoffgruppe, M ein Metall aus den Gruppen I - IV des Periodensystems und n und m ganze Zahlen bedeuten, so daß die Summe aus n + m der Wertigkeit des Metalls entspricht. Als Katalysator wird eine Halogenverbindung des Titans oder des Vanadiums eingesetzt, als Cokatalysator wirkt entweder die Metallverbindung $(CH_2 = CH-Z-O)_nM\ A_m$, falls sie Alkylgruppen enthält, anderenfalls werden Aluminium- oder Zinkalkyle zugesetzt.

Die spezifischen Ausbeuten an Copolymeren, gemessen in g Polymer/g Ti . h . atm (Propylen), liegen zwischen 10 und 70.

Das in GB-PS 15 05 480 beschriebene Verfahren zur Synthese von Copolymeren ist ein Zweistufenprozeß, der zu blockartig aufgebauten Copolymeren der Struktur [Poly α-Olefin]-[Polyvinylverbindung] führt. In einer ersten Stufe wird nach bekannten Verfahren mit Ziegler-Natta-Katalysatoren ein α-Olefin polymerisiert, in einer zweiten an die noch aktiven Polyolefinenden die Vinylverbindung, bevorzugt Acrylate und Methacrylate, bei gleichzeitiger Anwesenheit von Phosphinen und halogenierten Kohlenwasserstoffen als Co-Komponenten angelagert.

Nach dieser Methode sind mit Ethylen als Olefinkomponente Copolymere mit 30 bis 40 % Methylmethacrylat darstellbar bei einem Homopolymeranteil des Methylmethacrylaten von ungefähr 5 %, mit Propylen als Olefinkomponente enthält das Copolymer ca. 0,5 Gew.-% Methylmethacrylat, 2,6 Gew.-% liegen in Form von Homopolymer vor bei einer spezifischen Ausbeute von ungefähr 10 bis 30 g Polymer/g Ti . h . atm.

Das erfindungsgemäße Verfahren dagegen ermöglicht bei erhöhter Ausbeute den Einsatz von Allylalkohol und säuregruppenhaltigen ethylenisch ungesättigten Comonomeren.

Nach dem erfindungsgemäßen Verfahren bevorzugte substituierte polare Gruppen enthaltende α-Olefine (B) sind z.B. 3-Buten-1-ol; 4-Penten-1-ol, 5-Hexen-1-ol, 6-Hepten-1-ol, 7-Octen-1-ol; 10-Undecen-1-ol, 2-Methyl-3-buten-1-ol, 10-Undecen-1-säure.

Die substituierten α-Olefine (B) können in die Aluminiumverbindungen umgewandelt werden durch Umsetzung mit einer aluminiumorganischen Verbindung, z.B. der Formel (C)

$$Al\ R^6_n\ X_{3-n} \qquad (C)$$

in der R = $C_1$ - $C_{18}$ Alkyl, X = Halogen, vorzugsweise Chlor

ist und n eine ganze Zahl mit $0 < n \leq 3$.

Geeignete Aluminiumverbindungen sind z.B. Triethylaluminium, Triisopropylaluminium, Tri-n-butylaluminium und partiell halogenierte Aluminiumverbindungen wie Ethylaluminiumdichlorid, Diethylaluminiumchlorid, Diethylaluminiumbromid, Diethylaluminiumjodid. Besonders vorteilhaft ist Diethylaluminiumchlorid.

Diese Umwandlung kann in einem inerten Lösungsmittel durchgeführt werden, indem man die Lösung der $\alpha$-Olefine (B) in eine Lösung der Organoaluminium-Verbindung im molaren Verhältnis von 1 : 1 unter Rühren bei Raumtemperatur zutropft. Auf diese Weise wird nur ein Alkylrest der Organoaluminium-Verbindung substituiert und 1 Mol Kohlenwasserstoff freigesetzt. Geeignete Lösungsmittel sind Aliphaten und Cycloaliphaten mit 5 - 18 C-Atomen sowie chlorierte Kohlenwasserstoffe und Aromaten. Zum Beispiel eignen sich Pentan, Hexan, Heptan, Octan, Decan, Cyclohexan, Methylcyclohexan, Benzol, Toluol, Xylol, Ethylbenzol, Benzylchlorid, Dichlorethan. Besonders geeignet ist Isooctan.

Die genannten Lösungsmittel sind zugleich geeignet als Suspensionsmedium für die Polymerisation der Metallate der $\alpha$-Olefine (B) mit $\alpha$-Olefinen (A). Geeignete $\alpha$-Olefine (A) sind z.B. Ethylen, Propylen, Buten-1, Penten-1, Hexen-1, Undecen-1, 4-Methyl-penten-1 und Gemische daraus.

Die Polymerisation kann bei Temperaturen von 20 bis 100°C, vorzugsweise 60 bis 90°C, und bei Partialdrucken der Monomeren von 1 - 30 bar durchgeführt werden. Der feste katalytische Komplex auf Basis $TiCl_3$ kann in einer Konzentration von 0,1 - 500 m Mol/l, vorzugsweise 1 - 50 m Mol/l, verwendet werden. Cokatalysatoren sind die Aluminiumorganylen der Formel (C). Im allgemeinen beträgt das Mol-Verhältnis Aluminiumorganyl : $TiCl_3$-Komplex = 1 : 1 bis 100 : 1, bevorzugt 5 : 1 bis 20 : 1, besonders vorteilhaft

8 : 1 bis 12 : 1.

Zur Durchführung der Polymerisation können Katalysator und Cokatalysator vorteilhaft zunächst in etwa dem zehnten Teil des gesamten Lösungsmittels in einem dem Reaktionsgefäß vorgeschalteten Gefäß vereinigt werden; anschließend wird die erhaltene Suspension dem restlichen Lösungsmittel zugefügt, in welchem sich das α-Olefin (B) als Metallverbindung befindet. Das molare Verhältnis von α-Olefin (B)-Metallat zu $TiCl_3$-Komplex ist im allgemeinen 0,1 bis 100, insbesondere 20 bis 80. Zur Regulierung des Molekulargewichts kann Wasserstoff zugesetzt werden.

Nach der Polymerisation kann der Katalysator mit einem Alkohol/Salzsäure-Gemisch desaktiviert werden, wodurch entweder alkoholgruppenhaltige, säuregruppenhaltige oder phenolgruppenhaltige Poly-α-Olefine erhalten werden. Vorteilhaft kann der Polymerisationsansatz auch mit Carbonsäureanhydriden und Carbonsäurechloriden desaktiviert werden, was zur Bildung von estergruppenhaltigen Poly-α-Olefinen führt. Geeignet sind z.B. Acetylchlorid, Benzoylchlorid, Chlorkohlensäurephenylester, Acetanhydrid und dergl. Ungesättigte Carbonsäurederivate wie z.B. Acrylsäurechlorid und Methacrylsäurechlorid führen zu doppelbindungshaltigen Poly-α-Olefinen, welche z.B. als Pfropfgrundlage für weitere Polyreaktionen eingesetzt werden können. Die Desaktivierung mit bifunktionellen Carbonsäurederivaten führt zu vernetzten Poly-α-Olefinen.

Als Katalysatorbestandteil wird ein fester katalytischer Komplex auf Basis $TiCl_3$, kurz $TiCl_3$-Komplex, benutzt. Dies ist ein Produkt der allgemeinen Formel

$$TiCl_3 \ x \ (AlR^6_{n'}X_{3-n'})_x \ x \ (C)_y$$

worin R ein Kohlenwasserstoff mit 1 - 18 C-Atomen,
X ein Halogenatom (Chlor),
n' eine Zahl, so daß $0 \leq n' \leq 2$,
C ein Komplex bedeutendes Mittel,
x eine Zahl kleiner 0,3,
y eine Zahl größer 0,001

ist.

Diese Produkte und ihre Herstellung sind in der DE-OS 22 13 086 beschrieben.

Da die Copolymeren die gemäß der Erfindung beschriebenen funktionellen Gruppen besitzen, weisen sie antistatische Eigenschaften sowie ein gutes Haftvermögen und Bedruckbarkeit auf.

Die Erfindung wird durch folgende Beispiele erläutert:

Herstellung des katalytischen $TiCl_3$-Komplexes:

In einen 250-ml-Kolben wurden 60 ml getrocknetes und von Sauerstoff befreites Isooctan und 15 ml frisch destilliertes $TiCl_4$ (0,136 Mol) gegeben. Anschließend wurden 31,5 ml Ethylaluminiumsesquichlorid (0,139 Mol) in 80 ml Isooctan bei 0°C während 1 h unter langsamem Rühren tropfenweise zugegeben. Nach beendeter Zugabe wurde noch 1 h bei 0°C gerührt und das rotbraune Reaktionsprodukt bei 0°C abfiltriert und dreimal mit je 100 ml vorgekühltem Isooctan bei 0°C gewaschen. Der reduzierte Feststoff wurde in 100 ml Isooctan suspendiert, unter Rühren auf 65°C aufgeheizt und 1 h bei 65°C gerührt. Nach Abkühlen auf Raumtemperatur wurde noch einmal mit 100 ml Isooctan gewaschen und

dann in 170 ml Isooctan suspendiert. Jetzt wurden 25 ml (0,123 Mol) Diisoamylether zugegeben, 1 h bei Raumtemperatur und 1 h bei 35°C gerührt. Anschließend wurde der behandelte Feststoff dreimal mit je 100 ml Isooctan gewaschen und in 100 ml Isooctan suspendiert. Zu der Suspension wurden 60 ml $TiCl_4$ zugegeben, auf 65°C erwärmt und 4 h bei dieser Temperatur gerührt.

Nach Beendigung der Reaktion wurde der katalytische Komplex 5mal mit je 100 ml Isooctan gewaschen und in 150 ml Isooctan suspendiert. Die Konzentration der Suspension an $TiCl_4$ wurde durch Titration mit Cer(IV)-Sulfat bestimmt.

Polymerisation von Propylen in Isooctan.

Ein 2-Ltr.-Glasautoklav wurde mehrfach evakuiert und mit Argon gefüllt. Es wurden 800 ml Isooctan vorgelegt und anschließend eine Suspension von 250 mg der oben beschriebenen Katalysatorkomponente und 2,01 ml Diethylaluminiumchlorid (Al/Ti 10:1) in 200 ml Isooctan durch eine Membranpumpe zugepumpt. Die Polymerisation wurde 1 h bei 70°C unter einem Propylendruck von 4 bar durchgeführt. Der Druck wurde durch ständiges Nachdrücken von Propylen konstant gehalten. Am Ende der Reaktion wurde überschüssiges Propylen abgeblasen und die Polymersuspension mit einem Überschuß eines Methanol-Butanol-Gemisches behandelt. Nach Abfiltrieren und Trocknen des Polymeren bei 100°C im Vakuum wurden 208 g Polypropylen erhalten, das einen in siedendem n-Heptan unlöslichen Anteil von 96,4 % hatte. Dies entspricht einer spezifischen Ausbeute von 208 g PP/g $TiCl_3$ . h . atm.

Beispiel 1

Zu einer Lösung von 74,6 ml Diethylaluminiumchlorid ≙ 0,6 Mol in 200 ml Isooctan werden bei Raumtemperatur 121,6 ml Undecen-(10)-ol-1 ≙ 0,6 Mol in 200 ml Isoctan unter Rühren zugetropft, anschließend läßt man 1 Stunde bei 70$^{\circ}$C nachreagieren. Alle Operationen werden unter Argon durchgeführt.

Nach Überführen der ethylenisch ungesättigten Alkoxyverbindung in den Polymerisationsautoklaven wird die Lösung im Isooctan auf 3 l verdünnt. In einen dem Autoklaven vorgeschalteten Reaktionsgefäß werden 1,5 g modifiziertes $TiCl_3$ (Beispiel 1, Le A 18 589) ≙ 9,7 mMol mit 10,9 g Diethylaluminiummonochlorid ≙ 90,4 mMol in 100 ml Isooctan kontaktiert und die so erhaltene Suspension in den Reaktionsautoklaven gepumpt. Nach Erreichen der Polymerisationstemperatur von 70$^{\circ}$C wird 1 Stunde bei 4 bar Propylendruck polymerisiert, wobei der Druck durch ständiges Nachdrücken von Propylen konstant gehalten wird. Am Ende der Polymerisation wird nicht umgesetztes Propylen abgeblasen und die Polymersuspension mit einem Überschuß eines Methanol/n-Butanol/Salzsäure-Gemisches behandelt. Nach dem Abfiltrieren und Trocknen im Vakuum bei 100$^{\circ}$C werden 1400 g Mischpolymerisat erhalten mit einem Comonomergehalt von 9 Gew.-% und einem isotaktischen Anteil von 84 % ( % Polymeres unlöslich in siedendem n-Heptan). Dies entspricht einer spezifischen Ausbeute von 729 g Copolymer/g Ti · h · atm.

Beispiel 2

Zu einer Lösung von 20,3 ml Diäthylaluminiumchlorid ≙ 0,163 Mol in 400 ml Isooctan werden bei Raumtemperatur 30,0 g 10-Undecen-1-säure ≙ 0,163 Mol in 400 ml Isooctan unter Rühren zugetropft, anschließend läßt man eine Stunde bei 70°C nachreagieren.

Nach Überführung der Lösung in den Reaktionsautoklaven werden in einem dem Autoklaven vorgeschalteten Reaktionsgemäß 0,25 g modifiziertes $TiCl_3$ ≙ 1,6 mMol mit 20 ml einer 10 %igen Lösung von Diäthylaluminiumchlorid in 50 ml Isooctan kontaktiert und die so erhaltene Suspension in den Reaktionsautoklaven gepumpt, anschließend wird weiter nach Beispiel 1 verfahren. Es werden 200 g Mischpolymerisat mit einem Comonomergehalt von 8,5 Gew.-% und einem isotaktischen Anteil von 94,5 % erhalten. Dies entspricht einer spezifischen Ausbeute von 666 g PP-Copolymer/g Ti · h · atm.

Patentansprüche

1) Copolymere aus α-Olefinen der Formel (A)

$$CH_2 = \underset{R}{\underset{|}{CH}} \qquad (A)$$

worin

R Wasserstoff, Alkyl mit 1 bis 16 C-Atomen oder Phenyl bedeutet,

und substituierten α-Olefinen der Formel (B)

$$CH_2 = \overset{R^1}{\overset{|}{C}} - \left( \underset{H}{\overset{R^2}{\overset{|}{C}}} \right)_n - Z \qquad (B)$$

in der

$R^1$ H, $CH_3$;

$R^2$ H, Alkyl $C_1$-$C_4$;

n 2 bis 16;

Z -OH, -COOH

ist, in denen 1 bis 50 Gew.-% Monomer (B) einpolymerisiert sind und die einen Melt-Flow-Index 230/5 von 2 bis 20 g/10 Minuten haben.

2) Verfahren zur Herstellung von Copolymeren aus α-Olefinen der Formel (A) des Anspruchs 1 mit substituierten α-Olefinen der Formel (B) des Anspruchs 1, dadurch gekennzeichnet, daß man ein oder mehrere α-Olefine (A) mit einer Metallverbindung des substituierten

α-Olefins (B) der Formel

$$\left[ CH_2 = \overset{R^1}{\underset{}{C}} - \left( \overset{R^2}{\underset{H}{C}} \right)_n - Z' \right]_x AlA_y$$

worin

$R^1, R^2$ die bereits genannte Bedeutung haben,

Z -O-; -COO-,

A Halogen und/oder Alkyl,

x + y ganze Zahlen, deren Summe = 3,

umsetzt in Anwesenheit eines Katalysators aus einem festen katalytischen Komplex auf Basis $TiCl_3$ und einer Aluminiumverbindung der Formel (C)

$$AlR^6_n X_{3-n} \qquad (C)$$

worin

$R^6$ $C_1$-$C_{18}$-Alkyl,

X Halogen, bevorzugt Chlor, und

n: $0 < n \leq 3$ ist.

Europäisches Patentamt

# EUROPÄISCHER RECHERCHENBERICHT

Nummer der Anmeldung
EP 80 10 0058

## EINSCHLÄGIGE DOKUMENTE

| Kategorie | Kennzeichnung des Dokuments mit Angabe, soweit erforderlich, der maßgeblichen Teile | betrifft Anspruch | KLASSIFIKATION DER ANMELDUNG (Int.Cl.) |
|---|---|---|---|
| DX | DE - A - 1 947 109 (MITSUI)<br>* Ansprüche 1,2; Seite 6 *<br>-- | 1,2 | C 08 F 210/00<br>4/64//<br>(C 08 F 210/00<br>216/02<br>220/04) |
| | DE - A - 1 917 230 (ESSO)<br>* Anspruch; Seite 3 *<br>---- | 1,2 | |

RECHERCHIERTE SACHGEBIETE (Int. Cl.)

C 08 F 10/00-
10/14
210/00-
210/14
4/62
4/64

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

✗ Der vorliegende Recherchenbericht wurde für alle Patentansprüche erstellt.

| Recherchenort | Abschlußdatum der Recherche | Prüfer |
|---|---|---|
| Den Haag | 30-05-1980 | PERMENTIER |